**Europäisches Patentamt**

**European Patent Office**

**Office européen des brevets**

(19)

(11) Veröffentlichungsnummer: **0 677 973 A2**

# (12) EUROPÄISCHE PATENTANMELDUNG

(21) Anmeldenummer: **95103721.7**

(22) Anmeldetag: **15.03.95**

(51) Int. Cl.6: **H04Q 1/46**

(30) Priorität: **19.03.94 DE 4409434**

(43) Veröffentlichungstag der Anmeldung:
**18.10.95 Patentblatt 95/42**

(84) Benannte Vertragsstaaten:
**AT BE CH DE DK ES FR GB GR IE IT LI LU NL PT SE**

(71) Anmelder: **SWISSPHONE SYSTEMS GmbH**
**Karlsruher Strasse 2c**
**D-30519 Hannover (DE)**

(72) Erfinder: **Klausing, Matthias**
**Sulauer Strasse 7**
**D-31832 Springe (DE)**
Erfinder: **Zeuschner, Michael**
**Dorfstrasse 74**
**D-31542 Bad Nenndorf (DE)**
Erfinder: **Entelmann, Manfred**
**Im Winkel 14**
**D-31832 Springe (DE)**
Erfinder: **Klinger, Bernhard**
**Seikenbornstrasse 16**
**D-31008 Elze (DE)**

(74) Vertreter: **Lins, Edgar, Dipl.-Phys. Dr.jur.**
**Patentanwälte Gramm + Lins**
**Theodor-Heuss-Strasse 1**
**D-38122 Braunschweig (DE)**

(54) **Verfahren und Gerät zur Ermittlung von Rufkontrolltönen.**

(57) Rufkontrolltöne, die vor dem Beginn eines Telefongesprächs auf der Telefonleitung übermittelt werden, lassen sich ohne Vorkenntnis des speziellen Rufkontrolltons aus den auf der Telefonleitung übermittelten elektrischen Signalen ermitteln durch eine Umwandlung der Signale in Rechtecksignale, Messung der Zeitdauer zwischen Nulldurchgängen des gebildeten Rechtecksignals und Auswertung der gemessenen Zeitdauer durch Bildung von zahlreichen Meßintervallen und Bildung einer Statistik für die Häufigkeit des Auftretens von Meßwerten in den vorgegebenen Meßintervallen.

EP 0 677 973 A2

Die Erfindung betrifft ein verfahren zur Ermittlung von Rufkontrolltönen vor dem Beginn eines Telefongesprächs aus den auf der Telefonleitung übermittelten elektrischen Signalen. Die Erfindung betrifft ferner ein Gerät zur Ermittlung von Rufkontrolltönen vor dem Beginn eines Telefongesprächs mit wenigstens einem Sensor für auf der Telefonleitung übermittelte elektrische Signale.

Aus verschiedenen Gründen besteht für den Inhaber eines Telefonanschlusses ein Bedürfnis, die von dem Telefonanschluß geführten Gespräche insbesondere bezüglich der gebührenrechtlich relevanten Daten zu protokollieren. Bei Nebenstellenanlagen kann sich dieses Bedürfnis daraus ergeben, daß unter Umständen teure Telefongespräche einer bestimmten Nebenstelle zugeordnet werden können. Aufgrund von immer wieder vorkommenden zweifelhaften Abrechnungen durch den Telefonnetzbetreiber ergibt sich das genannte Bedürfnis auch für den Zweck, eine Überprüfung dieser Abrechnung - möglichst in beweiskräftiger Form - vornehmen zu können.

Es ist bekannt, in großen Nebenstellenanlagen für jede Nebenstelle ein Protokoll bezüglich der gewählten Nummer und der Uhrzeit des Telefonats zu erstellen. Die gewählte Nummer kann dabei unmittelbar aus den Tastensignalen ermittelt werden. Es ist ferner bekannt, die gewählte Nummer durch Wahlimpulse oder Wähltonsignale auf den Telefonleitungen zu ermitteln. Problematisch ist jedoch die Ermittlung des Beginns eines Telefonats. Hierfür ist es wesentlich, die eingehenden Rufkontrolltöne eindeutig zu ermitteln, da aus den elektrischen Signalen auf der Telefonleitung nach der Beendigung der Rufkontrolltöne sicherer auf einen Gesprächsbeginn oder ein nicht zustande gekommenes Gespräch geschlossen werden kann.

Sofern die Art des Rufkontrolltons bekannt ist, beispielsweise bei Beschränkung des Telefonverkehrs auf ein bestimmtes Telefonnetz (inländische Telefonate), wäre es denkbar, für den Rufkontrollton, der im wesentlichen aus einer einzigen Frequenz besteht, ein schmalbandiges Filter zu verwenden und eine Amplitude am Ausgang des Filters, die oberhalb eines Schwellwertes liegt, als Erkennungssignal für einen Rufkontrollton zu benutzen.

Der weltweit mögliche Selbstwählverkehr erfordert jedoch eine Erkennung von unterschiedlichsten Rufkontrolltönen, die durch Betreiber entfernt gelegener Telefonnetze geändert werden können. Für den unbegrenzten Wählbetrieb in fremde Telefonnetze ist eine vollständige Erkennung aller Rufkontrolltöne bisher nicht möglich.

Das der Erfindung zugrundeliegende Problem besteht daher darin, eine Erkennung unterschiedlichster Rufkontrolltöne zu ermöglichen.

Ausgehend von dieser Problemstellung ist ein Verfahren zur Ermittlung von Rufkontrolltönen der eingangs erwähnten Art gekennzeichnet durch eine Umwandlung der Signale in Rechtecksignale, Messung der Zeitdauer zwischen Nulldurchgängen des gebildeten Rechtecksignals und Auswertung der gemessenen Zeitdauern durch Bildung von zahlreichen Meßintervallen und Bildung einer Statistik für die Häufigkeit des Auftretens von Meßwerten in den vorgegebenen Meßintervallen.

Das erfindungsgemäße Verfahren erlaubt mit einem geringen Aufwand eine zuverlässige Erkennung von Rufkontrolltönen, indem die auf der Telefonleitung übermittelten elektrischen Signale jeweils bezüglich ihrer Frequenz ausgewertet werden, und zwar in einfacher Weise dadurch, daß die Signale in Rechtecksignale umgewandelt werden und die Zeit zwischen Nulldurchgängen des Rechtecksignals mit Hilfe eines hochfrequent getakteten Zählers ermittelt wird. Die gemessenen Zeiten entsprechen offensichtlich gemessenen Frequenzen und werden statistisch bezüglich der Häufigkeit ihres Auftretens durch Zuordnung zu bestimmten Meßintervallen (entsprechend Frequenzintervallen) ausgewertet.

Diese Art der Auswertung geht von der Erkenntnis aus, daß Rufkontrolltöne regelmäßig entweder aus einer konstanten Frequenz oder aus einem konstanten Frequenzgemisch bestehen, bei dem eine Frequenz dominierend ist.

Es ist daher möglich, die Meßergebnisse einem Rufkontrollton zuzuordnen, wenn ein ausgeprägtes Maximum in den Meßintervallen als Ergebnis einer vorherrschenden Frequenz festgestellt wird.

Je nach Anwendungszweck kann es sich auch erübrigen, die genannte Auswertung vorzunehmen, wenn sie nur erfindungsgemäß vorbereitet ist. Das erfindungsgemäße Verfahren kann auch angewendet werden, um in einer versiegelten Box die elektrischen Signale auf den Telefonleitungen zusammen mit anderen Parametern abzuspeichern, um so nur für den Fall einer ungewöhnlichen Abrechnung des Telefonnetzbetreibers den Telefonverkehr für einen zurückliegenden definierten Zeitraum rekonstruieren zu können. In diesem Fall können die den Meßintervallen zugeordneten Meßwerte als Parameter mit abgespeichert werden und die Identifizierung von Rufkontrolltönen zu Ermittlung des Gesprächsbeginns nachträglich erlauben.

Es ist zweckmäßig, den Meßbereich so festzulegen, daß alle verwendeten Rufkontrolltöne erfaßt werden. Ein Bandbereich von ca. 200 bis 600 Hz erscheint hierfür geeignet. Vorzugsweise werden die Meßintervalle bei dem erfindungsgemäßen Verfahren in einem Bandbereich zwischen 282 und 562 Hz gebildet, wobei es für die technische Realisierung zweckmäßig ist, wenn die untere Bandgrenze der halben Frequenz der oberen Bandgrenze entspricht.

Zur Korrektur von geringen Fehlmessungen und als Auswertungsparameter ist es zweckmäßig, die Anzahl von Messungen außerhalb der Meßintervalle des Bandbereichs zu bestimmen. Zur Fehlerkorrektur ist es zweckmäßig, aus dem Verhältnis dieser Anzahl zu der Anzahl der Gesamtmessungen einen Korrekturwert zu bilden, der von den ermittelten Meßwerten in allen Meßintervallen abgezogen wird. Somit ergibt sich eine korrigierte Meßwert-Gesamtheit (Meßvektor), die zur Auswertung herangezogen wird.

Zur Lösung der eingangs erwähnten Problemstellung ist das Gerät zur Ermittlung von Rufkontrolltönen der eingangs erwähnten Art erfindungsgemäß gekennzeichnet durch eine Stufe zur Umwandlung der Signale in Rechtecksignale, einen Nulldurchgangsdetektor für die Rechtecksignale, einen Meßzähler, der durch die Ausgangssignale des Nulldurchgangsdetektors gestartet und gestoppt werden kann, und durch eine Auswertungsschaltung für die festgestellten Zählerwerte mit Auswertungszählern, die bestimmten Zählerintervallen zugeordnet sind und bei einem Zählerstand des Meßzählers nach dessen Stoppen in dem ihm zugeordneten Meßintervall um 1 inkrementiert werden.

Zur Durchführung der oben beschriebenen Korrektur ist es zweckmäßig, wenn die Auswertungsschaltung eine Korrekturanordnung enthält, die die festgestellten Zählerwerte der Auswertungszähler in Abhängigkeit von dem Verhältnis von Meßwerten außerhalb der bestimmten Zählerintervalle zu der Gesamtzahl der Messungen reduziert.

Soll der Rufkontrollton automatisch durch das erfindungsgemäße Gerät identifiziert werden, kann die Auswertungsschaltung den Rufkontrollton identifizieren, wenn ein ausgeprägtes Maximum der Zählerstände der Auswertungszähler in im wesentlichen einem Meßintervall erkennbar ist und die Anzahl der Meßwerte außerhalb der Meßintervalle unterhalb eines vorgegebenen Grenzwertes liegen.

Die Erfindung wird im folgenden anhand von Ausführungsbeispielen näher erläutert.

Das auf der Telefonleitung beispielsweise mit einem Spannungs- und/oder Stromsensor festgestellte Signal wird mit einer Verstärkerschaltung, die im Übersteuerungsbereich arbeitet, so verstärkt, daß es zu einem Rechteck verzerrt wird. Durch einen Schmitt-Trigger kann das Signal zu einem TTL-Signal umgeformt werden, so daß das Puls-Pausen-Verhältnis dieses Rechtecksignals über die fallenden Flanken des Signals ermittelt werden kann. Um immer die Zeit einer ganzen Periode zu messen, kann das Frequenzsignal über einen Frequenzteiler halbiert werden. Dadurch wird vermieden, daß ein Versatz des Nulldurchganges innerhalb einer Periode die Frequenzmessung beeinflußt.

Die Messung der Periodendauer wird mit einer Torzeitmessung durchgeführt. Solange das gemessene Signal einen "high"-Pegel annimmt, wird ein Tor geöffnet, so daß ein Zähler aktiv ist. Mit fallender Flanke wird das Tor geschlossen und ein "Interrupt" ausgelöst.

Die Zeitbasis für den Zähler wird aus dem Prozessortakt abgeleitet.

In einem Ausführungsbeispiel wird die Taktfrequenz aus einem 18,432 MHz-Takt durch Teilung durch 256 abgeleitet, so daß sich für den Zähler eine Taktfrequenz von 72 kHz ergibt.

Die festgestellten Zählerwerte n lassen sich dann mit folgender Gleichung in Frequenzen umrechnen:

$$n = \frac{f_{takt}}{f_{sig}}$$

Um eine Bandbegrenzung zu erreichen, werden nur bestimmte Zählerwerte zugelassen. Da es sich bei dem Zähler um einen 16 Bit-Zähler mit getrennten "high"- und "low"-Anteil handelt, werden die Grenzwerte so gewählt, daß der "high"-Anteil 0 bleibt und der "low"-Anteil einen Wert von 128 nicht unterschreitet.

Daraus ergeben sich folgende Grenzfrequenzen:

$$f_{ug} = \frac{f_{takt}}{n_{ug}} = \frac{72 \text{ KHz}}{255} = 282 \text{ Hz}$$

$$f_{og} = \frac{f_{takt}}{n_{og}} = \frac{72 \text{ KHz}}{128} = 562 \text{ Hz}$$

Der gültige Bereich des Zählers liegt somit zwischen 128 und 255 und wird in 16 Intervalle geteilt. Man erhält dann einen auszunutzenden Wertebereich von 8 bis 16. Damit ergeben sich für die einzelnen Werte folgende Frequenzbereiche

| normierter Wert | Zählwert | Frequenzbereich in Hz | Mittenfrequenz in Hz |
|---|---|---|---|
| 8 | 128 - 143 | 562 - 503 | 531 |
| 9 | 144 - 159 | 500 - 453 | 475 |
| 10 | 160 - 175 | 450 - 411 | 430 |
| 11 | 176 - 191 | 409 - 377 | 393 |
| 12 | 192 - 207 | 375 - 347 | 361 |
| 13 | 208 - 223 | 346 - 323 | 334 |
| 14 | 224 - 239 | 321 - 301 | 311 |
| 15 | 240 - 255 | 300 - 282 | 291 |

In dem Zählverfahren wird bei jedem Interrupt die Torzeit ermittelt. Der Meßzähler, der dem zugehörigen Meßintervall zugeordnet ist, wird um 1 inkrementiert. Die oben erwähnten normierten Werte 8 bis 15 ergeben die Meßintervalle 1 bis 8, die jeweils einer Meßzelle mit einem Meßzähler entsprechen. Gemessene Zählerstände, die außerhalb der zugelassenen Zählintervalle liegen, werden in einer Meßzelle 0 abgelegt, beim Auftreten derartiger Meßwerte wird also der Meßzähler für die Meßzelle 0 um 1 inkrementiert.

Nach Aufnahme von genügend Meßwerten ergibt sich in einem Meßvektor die Abbildung einer Charakteristik des anliegenden Signals.

Zur Herstellung der Vergleichbarkeit der Meßreihen ist es zweckmäßig, bei der Frequenzbewertung die Zeit, in der die Meßreihe aufgenommen wurde, zu eliminieren, indem der entstandene Meßvektor in normierter Form ausgedrückt wird.

Ferner ist es zweckmäßig, von allen Meßwerten des Meßvektors, die im gültigen Bereich des Frequenzbandes liegen, einen Betrag abzuziehen. Dieser Betrag ergibt sich zweckmäßigerweise aus der Gesamtanzahl der Messungen sowie aus der Anzahl der Meßwerte, die in der Meßzelle 0 liegen, also außerhalb des Bandbereichs liegen.

Das nachfolgende Beispiel soll dies verdeutlichen:

Für eine Anzahl von 133 Messungen soll sich der folgende Meßvektor ergeben haben:

| 0 | 1 | 2 | 3 | 4 | 5 | 6 | 7 | 8 |
|---|---|---|---|---|---|---|---|---|
| 4 | 9 | 102 | 17 | 1 | 0 | 0 | 0 | 0 |

Die in der Meßzelle 0 liegenden vier Messungen stellen 3 % aller Messungen dar.

Von den gültigen Messungen werden nun 2,5 % vom Grundwert abgezogen. In absoluten Messungen bedeutet dies 2,5 % x 133 / 100 % = 3.

Von allen gültigen Meßwerten werden nun drei Messungen abgezogen. Hieraus ergibt sich ein korrigierter Meßvektor für die Zellen 1 bis 8:

| 0 | 1 | 2 | 3 | 4 | 5 | 6 | 7 | 8 |
|---|---|---|---|---|---|---|---|---|
| 4 | 6 | 99 | 14 | 0 | 0 | 0 | 0 | 0 |

Die Normierung dieses Meßvektors ergibt sich durch die Summierung aller verbliebenen Meßwerte in den Meßzellen 1 bis 8 durch:

$$\text{Summe } (1 - 8) = 6 + 99 + 14 = 119$$
$$\text{Normwert } (x) = \text{Wert } (x) \times 100 \% / \text{Summe } (1 - 8).$$

Hieraus ergibt sich:

| 0 | 1 | 2 | 3 | 4 | 5 | 6 | 7 | 8 |
|---|---|---|---|---|---|---|---|---|
| 4 | 5 | 83 | 11 | 0 | 0 | 0 | 0 | 0 |

Für die Auswertung, ob ein Rufkontrollton vorliegt oder nicht, könnte beispielsweise als Kriterium herangezogen werden:

1. Ein Rufkontrollton hat genau an einer Stelle ein ausgeprägtes Maximum (Minimum ca. 70 %).

2. Außerhalb des Bandbereiches lagen nur maximal 5 % aller Messungen.

Nach diesen Kriterien lag in dem obigen Beispiel ein Rufkontrollton vor, da in der Meßzelle 2 ein ausgeprägtes Maximum von 83 % festzustellen war und außerhalb des Bandbereichs (Meßzelle 0) nur 3 % der Messungen lagen.

Für die Durchführung eines Telefongesprächs können bei Anwendung des erfindungsgemäßen Verfahrens beispielsweise folgende Meßergebnisse entstehen:

Land: Deutschland

Anzahl der Rufkontrolltöne: 5

CCITT-Rufton: $f = 400$ Hz oder 425 Hz, $t_{on} = 1s$, $t_{off} = 4s$

**Reale Meßergebnis**
(Anzahl der Messungen)

**Normierte Meßergebnis**
(Prozentuale Darstellung)

1. Abschnitt
Messungen resultierend aus Pulswahl (sind nicht von Bedeutung)

```
020 001 010 004 001 001 000 003 000 040  > 050 000 064 021 000 000 000 014 000
074 010 026 111 006 009 005 009 001 251  > 029 002 014 077 000 002 000 002 000
```

2. Abschnitt
Messungen resultierend aus Rufkontrolltönen

Maximum

```
002 000 001 101 000 000 000 000 000 104  > 001 000 000 100 000 000 000 000 000
001 000 002 211 000 000 000 000 000 214  > 000 000 000 100 000 000 000 000 000
001 000 002 209 000 000 000 000 000 212  > 000 000 000 100 000 000 000 000 000
006 000 002 211 001 000 000 000 000 220  > 002 000 000 100 000 000 000 000 000
000 001 000 212 001 000 000 000 000 214  > 000 000 000 100 000 000 000 000 000
```

3. Abschnitt
Messungen resultierend aus Sprache oder anderen Signalen

```
055 009 017 023 022 051 016 001 000 194  > 028 004 011 016 015 041 010 000 000
059 009 009 049 122 002 001 000 000 251  > 023 001 001 026 070 000 000 000 000
028 007 010 007 001 002 000 001 003 059  > 047 025 037 025 000 004 000 000 008
```

```
S01 S02 S03 S04 S05 S06 S07 S08 S09 S10    S11 S12 S13 S14 S15 S16 S17 S18 S19
```

Legende:

S01 - Spalte 1 -> Reale Anzahl der Frequenzanteile außerhalb des Bandes 291 Hz - 562 Hz

S02 - Spalte 2 -> Reale Anzahl der Frequenzanteile von 562 Hz bis 503 Hz
S03 - Spalte 3 -> Reale Anzahl der Frequenzanteile von 500 Hz bis 453 Hz
S04 - Spalte 4 -> Reale Anzahl der Frequenzanteile von 450 Hz bis 411 Hz
S05 - Spalte 5 -> Reale Anzahl der Frequenzanteile von 409 Hz bis 377 Hz
S06 - Spalte 6 -> Reale Anzahl der Frequenzanteile von 375 Hz bis 347 Hz
S07 - Spalte 7 -> Reale Anzahl der Frequenzanteile von 346 Hz bis 323 Hz
S08 - Spalte 8 -> Reale Anzahl der Frequenzanteile von 321 Hz bis 301 Hz
S09 - Spalte 9 -> Reale Anzahl der Frequenzanteile von 300 Hz bis 282 Hz

S10 - Spalte 10 -> Gesamtanzahl aller Messungen

S11 - Spalte 11 -> Normierte Anzahl der Frequenzanteile außerhalb des Bandes
282 Hz - 562 Hz

S12 - Spalte 12 -> Normierte Anzahl der Frequenzanteile von 562 Hz bis 503 Hz
S13 - Spalte 13 -> Normierte Anzahl der Frequenzanteile von 500 Hz bis 453 Hz
S14 - Spalte 14 -> Normierte Anzahl der Frequenzanteile von 450 Hz bis 411 Hz
S15 - Spalte 15 -> Normierte Anzahl der Frequenzanteile von 409 Hz bis 377 Hz
S16 - Spalte 16 -> Normierte Anzahl der Frequenzanteile von 375 Hz bis 347 Hz
S17 - Spalte 17 -> Normierte Anzahl der Frequenzanteile von 346 Hz bis 323 Hz
S18 - Spalte 18 -> Normierte Anzahl der Frequenzanteile von 321 Hz bis 301 Hz
S19 - Spalte 19 -> Normierte Anzahl der Frequenzanteile von 300 Hz bis 282 Hz

Die Messungen in dem ersten Abschnitt resultieren aus einer Impulswahl. Sie zeigen keine ausgeprägten Maxima und insbesondere einen hohen Anteil von Meßergebnissen außerhalb des vorgegebenen Bandbereichs.

Die Messungen im zweiten Abschnitt lassen eine eindeutige Identifikation von Rufkontrolltönen erkennen.

Die Messungen im dritten Abschnitt resultieren aus dem Telefongespräch und anderen Signalen, auch hier ist der Anteil der außerhalb des Bandbereichs liegenden Frequenzen auffällig.

Ein weiteres Beispiel ergibt sich nachstehend für ein Telefonat nach Hongkong mit vorher unbekannten Ruftönen, die sich dennoch eindeutig identifizieren lassen.

Land: Hongkong

Anzahl der Rufkontrolltöne: 3

Bemerkungen: Gespräch, Mehrfrequenz (MF)

CCITT - Ringing Tone: nicht bekannt

058 012 002 003 006 009 004 001 001 096 -> 060 041 000 004 016 029 008 000 000
022 006 002 000 001 007 002 001 001 042 -> 052 038 007 000 000 046 007 000 000
030 008 004 000 000 011 003 000 002 058 -> 051 030 013 000 000 043 008 000 004
042 010 006 000 000 016 004 000 003 081 -> 051 027 013 000 000 048 006 000 003
040 008 006 000 001 016 005 001 002 079 -> 050 021 015 000 000 046 012 000 003
045 008 003 001 001 013 007 000 004 082 -> 054 024 004 000 000 044 020 000 008

005 004 193 000 000 000 012 004 000 218 -> 002 000 096 000 000 000 003 000 000
004 002 070 001 001 001 005 002 001 087 -> 004 000 095 000 000 000 004 000 000
005 002 075 000 000 000 005 001 001 089 -> 005 000 096 000 000 000 003 000 000

011 006 005 007 000 000 001 000 000 030 -> 036 031 026 036 000 000 005 000 000
020 008 005 005 001 000 001 000 000 040 -> 050 046 026 026 000 000 000 000 000

Der erste Block der Meßergebnisse ergibt sich aus den Wahlsignalen und zeigt hohe prozentuale Anteile von Meßfrequenzen außerhalb des vorgegebenen Bandbereichs.

Im zweiten Block ist ein ausgeprägtes Maximum feststellbar. Meßwerte außerhalb des vorgegebenen Bandbereichs liegen unter 5 %.

Im dritten Block ergeben sich Meßwerte aus Gespräch und anderen Tönen.

**Patentansprüche**

1. Verfahren zur Ermittlung von Rufkontrolltönen vor dem Beginn eines Telefongesprächs aus den auf der Telefonleitung übermittelten elektrischen Signalen, **gekennzeichnet durch** eine Umwandlung der Signale in Rechtecksignale, Messung der Zeitdauer zwischen Nulldurchgängen des gebildeten Rechtecksignals und Auswertung der gemessenen Zeitdauer durch Bildung von zahlreichen Meßintervallen und Bildung einer Statistik für die Häufigkeit des Auftretens von Meßwerten in den vorgegebenen Meßintervallen.

2. Verfahren nach Anspruch 1, gekennzeichnet durch eine Zuordnung des Meßergebnisses zu einem Rufkontrollton, wenn ein ausgeprägtes Maximum in den Meßintervallen als Ergebnis einer vorherrschenden Frequenz festgestellt wird, und die Meßwerte außerhalb der vorgegebenen Meßintervalle unter einem vorgegebenen Schwellwert liegen.

3. Verfahren nach Anspruch 1 oder 2, dadurch gekennzeichnet, daß die Messung der Zeitdauer mit einem hochfrequent getakteten Zähler vorgenommen wird und die Meßintervalle durch Einteilung des Zählerbereichs in $2^n$ Intervalle gebildet werden, wobei $2 \leq n \leq 6$ ist.

4. Verfahren nach einem der Ansprüche 1 bis 3, dadurch gekennzeichnet, daß die Meßintervalle in einem Bandbereich von ca. 200 bis 600 Hz gebildet werden.

5. Verfahren nach Anspruch 4, dadurch gekennzeichnet, daß die Meßintervalle in einem Bandbereich zwischen 282 und 562 Hz gebildet werden.

6. Verfahren nach einem der Ansprüche 1 bis 5, dadurch gekennzeichnet, daß die Anzahl von Messungen außerhalb der Meßintervalle des Bandbereichs bestimmt wird und aus dem Verhältnis dieser Anzahl zu der Anzahl der gesamten Messungen ein Korrekturwert gebildet wird, der von den ermittelten Meßwerten in allen Meßintervallen abgezogen wird.

7. Gerät zur Ermittlung von Rufkontrolltönen vor dem Beginn eines Telefongesprächs mit wenigstens einem Sensor für auf der Telefonleitung übermittelte elektrische Signale, **gekennzeichnet durch** eine Stufe zur Umwandlung der Signale in Rechtecksignale, einem Nulldurchgangsdetektor für die Rechtecksignale, einem Meßzähler, der durch die Ausgangssignale des Nulldurchgangsdetektors gestartet und gestoppt werden kann, und einer Auswertungsschaltung für die festgestellten Zählerwerte mit Auswertungszählern, die bestimmten Zählerintervallen zugeordnet sind und bei einem Zählerstand des Meßzählers nach dessen Stoppen in dem ihm zugeordneten Meßintervall um 1 inkrementiert werden.

8. Gerät nach Anspruch 7, dadurch gekennzeichnet, daß die Auswertungsschaltung eine Korrekturanordnung enthält, die die festgestellten Zählerwerte der Auswertungszähler in Abhängigkeit von dem Verhältnis von Meßwerten außerhalb der bestimmten Zählerintervalle zu der Gesamtzahl der Messungen reduziert.

9. Gerät nach Anspruch 7 oder 8, dadurch gekennzeichnet, daß die Auswertungsschaltung einen Rufkontrollton identifiziert, wenn ein ausgeprägtes Maximum der Zählerstände der Auswertungszähler in im wesentlichen einem Meßintervall erkennbar ist, und die Anzahl der Meßwerte außerhalb der Meßintervalle unterhalb eines vorgegebenen Grenzwerts liegen.